# EUROPÄISCHE PATENTANMELDUNG

(11) **EP 1 318 260 A2**
(43) Veröffentlichungstag der Anmeldung: **11.06.2003**
(21) Anmeldenummer: 02027213.4
(22) Anmeldetag: 05.12.2002
(51) Int. Cl.: E05F 15/00, E05F 15/14, H02J 7/02

(54) **Mehrteilige Schutz- und Überwachungsvorrichtung**

(30) Priorität: 06.12.2001 BE 200100792
(71) Anmelder: Aso GmbH Antriebs- und Steuerungstechnik, 33154 Salzkotten (DE)
(72) Erfinder: Beckers, Alexander, B-3882 Wellen (BE); Friedrich, Helmut, D-59556 Lippstadt (DE)
(74) Vertreter: Flügge, Christian

(57) **Zusammenfassung**

Bei einer mehrteiligen Schutz- und Überwachungsvorrichtung, aufweisend wenigstens zwei miteinander optisch nach Art einer Lichtschranke in Verbindung stehende Übertragungsvorrichtungen, jeweils angebracht an relativ zueinander geradlinig bewegbaren Trägern, erfolgt die Energieversorgung einer ersten Übertragungsvorrichtung 68 aus einem Festnetz und die Energieversorgung einer zweiten Übertragungsvorrichtung 69 aus einem Akkumulator 61. Die erste und die zweite Übertragungsvorrichtung 68,69 verfügen über Kopplungsvorrichtungen 45,53 für eine kontaktlose, induktive Energieübertragung in einer Grundstellung für eine Energieversorgung der zweiten Übertragungsvorrichtung 69, insbesondere für das Laden des Akkumulators 61.

## Beschreibung

Die Erfindung betrifft eine mehrteilige Schutz- und Überwachungsvorrichtung, aufweisend wenigstens zwei miteinander optisch nach Art einer Lichtschranke in Verbindung stehende Übertragungsvorrichtungen, jeweils angebracht an relativ zueinander geradlinig bewegbaren Trägern.

In Schutz- und Überwachungsvorrichtungen finden Lichtschranken in vielfältigen Ausführungsformen regelmäßig Verwendung, die optisch miteinander kommunizierende Übertragungsvorrichtungen mit Sendern und Empfängern aufweisen. Wird ein von dem Sender im sichtbaren oder im nichtsichtbaren Bereich des Lichtes ausgestrahlter Lichtstrahl von dem Empfänger nicht mehr empfangen, beispielsweise durch ein zwischen Sender und Empfänger getretenes Hindernis, wird ein Schutz- oder ein Sicherungsmechanismus in Bewegung gesetzt, der im wesentlichen von der Verwendung abhängt. So kann beispielsweise ein sich schließendes Tor gestoppt werden, wenn ein die Zufahrt überstreichender Lichtstrahl von einem Fahrzeug oder einer Person unterbrochen wird.

Insbesondere bei der Verwendung derartiger Schutz- und Überwachungsvorrichtungen bei Türen und Toren, jedoch auch bei insbesondere auf Gleisen selbstfahrenden Kränen, Hubvorrichtungen, Förderfahrzeugen oder dergleichen, auch bei großen, gegeneinander beweglichen Maschinenteilen, wo regelmäßig ein Durchgang, eine Durchfahrt oder ein sonstiger sicherheitsrelevanter Bereich von optisch kommunizierenden Übertragungsvorrichtungen überwacht wird, stellt sich regelmäßig das Problem der Energieversorgung zumindest einer der Übertragungsvorrichtungen, da deren Träger relativ zu einander bewegbar sind, insbesondere ein Träger gegenüber einer feststehenden Vorrichtung, beispielsweise ein Schiebetor in einer entsprechenden Halterung.

Lösungen der Energieversorgungen beispielsweise mittels Schleifringen oder dergleichen sind in einem Freiluftbetrieb aufgrund ihrer Korrosions- bzw. Schmutzanfälligkeit wenig sicher. Aufgrund von Kabelbrüchen, beispielsweise nach großen Temperaturschwankungen, erscheinen auch Kabelschlaufen als wenig zweckmäßig. Relativ sicher ist eine autarke Energieversorgung einer der Übertragungsvorrichtungen mittels Akkumulatoren, deren Kapazität jedoch aufgrund des zur Verfügung stehenden Raums und durch ihr hohes Gewicht zumeist begrenzt ist.

Vor diesem technischen Hintergrund macht die Erfindung es sich zur Aufgabe, eine mehrteilige Schutz- und Überwachungsvorrichtung der genannten Art zur Verfügung zu stellen, bei der die an relativ zueinander bewegbaren Trägern angebrachten, optisch miteinander kommunizierenden Übertragungsvorrichtungen sicher mit Energie versorgt werden bei gleichzeitig sehr kompakter Bauweise.

Zur Lösung dieser technischen Problematik wird gem. des Anspruch 1 bei einer mehrteiligen Schutz- und Überwachungsvorrichtung, aufweisend wenigstens zwei miteinander optisch nach Art einer Lichtschranke in Verbindung stehende Übertragungsvorrichtungen, jeweils angebracht an relativ zueinander geradlinig bewegbaren Trägern darauf abgestellt, dass die Energieversorgung einer ersten Übertragungsvorrichtung aus einem Festnetz erfolgt, dass die Energieversorgung einer zweiten Übertragungsvorrichtung aus einem Akkumulator erfolgt und dass die erste und die zweite Übertragungsvorrichtung Kopplungsvorrichtungen für eine kontaktlose, induktive Energieübertragung in einer Grundstellung aufweisen für eine Energieversorgung der zweiten Übertragungsvorrichtung.

Die induktive Energieübertragung insbesondere für das Laden des Akkumulators der zweiten Übertragungsvorrichtung erlaubt es, diese hinsichtlich der Energieversorgung weitgehend autark zu gestalten und dies insbesondere unter Verzicht auf externe Kabelanschlüsse, Schleifer, Schleifringe, Steckkontakte oder dergleichen mehr. Vielfältige Fehlerquellen sind so vermieden und eine sichere Funktionsweise sichergestellt. Zweckmäßigerweise wird dabei die zweite Übertragungsvorrichtung regelmäßig an einem Träger befestigt sein, der gegenüber einem Unbeweglichen bewegbar ist.

Vielfältige Sicherheitsvorschriften verlangen häufig, dass neben der Überwachung durch eine Lichtschranke an bewegbaren Stoßkanten Sicherheitskontaktleisten angeordnet sind, wie sie beispielsweise in der DE 29 921 958 beschrieben sind. Zweckmäßigerweise wird dann an diesem Träger, an dem die wenigstens eine Sicherheitskontaktleiste angeordnet ist, eine mit einem Sender versehene Übertragungsvorrichtung angeordnet sein und an dem anderen Träger eine Übertragungsvorrichtung mit einem Empfänger, wobei der Sender ein den Zustand der Sicherheitskontaktleiste charakterisierendes Signal ausstrahlt.

Das Signal kann in vielfältiger Weise von dem Sender ausgesendet werden, wobei zweckmäßigerweise das Signal mittels eines Lichtstrahls auch einer Lichtschranke übertragen werden kann. Hierbei bietet es sich beispielsweise an, dass auch durch einen auslösenden Kontakt an der Sicherheitskontaktleiste der Lichtstrahl der Lichtschranke unterbrochen wird und damit die entsprechende Sicherheitsmaßnahme eingeleitet wird. Eine bevorzugte Alternative ist jedoch eine Signalübertragung bspw. durch Modulation eines speziell vorgesehenen Lichtstrahls und/oder eine digitalisierte Datenübertragung.

In konstruktiver Ausgestaltung der Vorrichtung nach der Erfindung kann weiter vorgesehen sein, dass eine als Empfänger ausgebildete Übertragungsvorrichtung mit einem zweiten Sender versehen ist. Eine solche, zumeist an einem stationären Träger angeordnete Übertragungsvorrichtung kann dann eine Durchfahrt oder einen Durchgang in an sich herkömmlicher Weise mit einer Lichtschranke, deren Lichtstrahl von dem zweiten Sender ausgestrahlt wird, überwachen und einen anderen Lichtstrahls, durch den den Zustand von Sicherheitskontaktleisten charakterisierende Signale übertragen werden, empfangen und auswerten, um bei Bedarf die nötigen Schutzmaßnahmen einzuleiten.

Alternativ bietet es sich an, dass die mit einem Sender ausgebildete Übertragungsvorrichtung mit einem weiteren Sender versehen ist und dass die ausgesendeten Signale von Empfängern zweier anderer Übertragungsvorrichtungen empfangen werde. Infolge dieser Maßnahme kann die insbesondere an einem beweglichen Träger angeordnete Übertragungsvorrichtung beispielsweise eine Durchfahrt, einen Durchgang oder dergleichen durch eine Lichtschrank überwachen, wie auch durch einen weiteren Lichtstrahl zwischen dem Sender und der zweiten, beispielsweise feststehenden Übertragungsvorrichtung Informationen über den Zustand von Sicherheitskontaktleisten übertragen. Darüber hinaus kann, bei entsprechender Ausbildung der mit zwei Sendern versehenen Übertragungsvorrichtung erreicht werden, dass diese in zwei Grundstellungen mit Energie versorgt werden kann.

Zweckmäßigerweise sind die beiden Empfänger zu einander ortsfest an einem Träger angeordnet. Dabei kann der Träger ein Maschinenbauteil oder dergleichen sein oder im Sinne der Erfindung auch eine Torhalterung, die über den Boden mit einem Toranschlag im Sinne der Erfindung einen Träger auch ausbildet.

In einer bevorzugten Ausführungsform erfolgt die optische Kommunikation zwischen den Sendern und den Empfängern in einer Fluchtlinie, so dass die Übertragungsvorrichtungen in äußerst kompakter Bauweise erstellt werden können.

In weiterer konstruktiver Ausgestaltung ist vorgesehen, dass wenigstens eine Übertragungsvorrichtung in der Richtung der Bewegung der Übertragungsvorrichtungen zueinander gegen die Kraft einer Feder verschiebbar angeordnet ist. Durch die federnde Aufhängung zumindest einer der Übertragungsvorrichtungen kann beispielsweise ein gewisses Spiel auch ausgeglichen werden, wenn die Übertragungsvorrichtungen in der Grundstellung für eine kontaktlose, induktive Energieübertragung zusammengefahren sind. Insbesondere erfolgt ein mögliches Auflaufen der Übertragungsvorrichtungen durch die Kraft der Feder(n) stoßgedämpft und können durch Federn die Übertragungsvorrichtungen währen der Energieübertragung in der Grundstellung auch in einer Anlage gehalten werden.

Für diese Energieübertragung ist weiter vorgesehen, dass eine einsteckbare Kopplungsvorrichtung einen Kern mit einer primären Wicklung und die andere Kopplungsvorrichtung eine buchsenartige Aufnahme mit einer sekundären Wicklung für eine Aufnahme der anderen Kopplungsvorrichtung aufweist und dass in der Grundstellung die sekundäre Wicklung und die primäre Wicklung koaxial und zumindest teilweise axial überlappend positioniert sind. In vorteilhafter Weise ist die axiale Positionierung des einsteckbaren Kerns gegenüber der buchsenartigen Aufnahme wenig kritisch. Eine Energieübertragung hoher Leistungen ist bereits dann gewährleistet, wenn lediglich eine hälftige axiale Überdeckung der Wicklungen gegeben ist.

Vorzugsweise ist die primäre Wicklung an das Festnetz und die sekundäre Wicklung über ein Netzteil an den Akkumulator angeschlossen. Das Festnetz wird in der Regel ein Wechselstrom-Niederspannungsnetz sein, so dass eine induktive Energieübertragung erfolgen kann. Damit gibt auch die sekundäre Wicklung einen Wechselstrom ab, der über ein Netzteil gleichgerichtet und stabilisiert den Akkumulator auflädt und in der Grundstellung auch andere Verbraucher speisen kann.

In konstruktiver Ausgestaltung ist weiter vorgesehen, dass der Kern Lamellen aufweist, die sich axial erstrecken. Ein konstruktiv einfacher, jedoch sehr stabiler Aufbau ist so gewährleistet. Liegen die Wickelachsen der Wicklungen auf einer gemeinsamen zentralen Symmetrieachse, so ist ein kompakter koaxialer Aufbau gegeben, wenn in der Grundstellung der eine Kopplungsvorrichtung in die buchsenartige Aufnahme der anderen Kopplungsvorrichtung eingesteckt ist.

Die sekundäre Wicklung kann auf einem rohrartig ausgebildeten Trafoblech als Kern beispielsweise angeordnet sein, durch das die Aufnahme auch ausgebildet wird. Bevorzugt wird jedoch, dass die sekundäre Wicklung innerhalb eines Ringkerns angeordnet ist, womit die Effizienz der Energieübertragung weiter gesteigert werden kann.

In einer bevorzugten Ausgestaltung ist für die Energieübertragung vorgesehen, dass in der Grundstellung in einem Längsschnitt die Kopplungsvorrichtungen wie ein Einphasen-Manteltransformator ausgebildet sind, der in einer Mittelebene quer zu der des Längsschnitts teilbar ist und dass jeweils eine Kernhälfte eine Wicklung trägt. Es heißt dies, dass die Außenschenkel sowie der Kern eines derartigen Manteltransformators in eine Mittelebene getrennt sind und in der Grundstellung für die Ausbildung des magnetischen Flusses geschlossen werden. Dabei trägt der Kern die Wicklungen jedoch nicht übereinander, sondern nebeneinander, womit die Übertragungsvorrichtungen voneinander trennbar sind.

Eine derartige Ausbildung der Kopplungsvorrichtungen lässt es zu, dass eine Übertragungsvorrichtung in einen Längsschnitt L-förmig ausgebildet ist und dass in den Raum zwischen den Schenkeln in der Grundstellung die zweite, in diesem Längsschnitt rechteckige Übertragungsvorrichtung aufgenommen ist. Der Gefahr einer möglichen Beschädigung bei einem Dejustierung einer der Übertragungsvorrichtungen in einen rauen Alltagsbetrieb ist damit verringert, da die bei einer koaxialen Anordnung nötige exakte Zentrierung von Kern und Aufnahme vermieden ist. Darüber hinaus ist es weiter möglich, die Kopplungsvorrichtung der L-fömig ausgebildeten Übertragungsvorrichtung wahlweise in einem der Schenkel anzuordnen, so dass die Außenschenkel und der Kern sich in der Richtung der Bewegung der Übertragungsvorrichtungen zueinander oder quer dazu erstrecken können.

Die Erfindung wird anhand der Zeichnung näher erläutert, in der lediglich Ausführungsbeispiele schematisch dargestellt sind.

In der Zeichnung zeigt:
- Fig. 1: eine erste Kopplungsvorrichtung nach der Erfindung,
- Fig. 2: die Kopplungsvorrichtung nach Fig. 1 in einer Grundstellung,
- Fig. 3: einen Schnitt durch die Kopplungsvorrichtung gem. der Linie III, III in Fig. 2,
- Fig. 4: einen Schnitt gem. der Linie IV, IV in Fig. 3,
- Fig. 5: einen Schnitt mit nur halb eingeschobenen Kern,
- Fig. 6: ein weiteres Ausführungsbeispiel koaxial angeordneter Kopplungsvorrichtungen,
- Fig. 7: als Beispiel für die Verwendung der Vorrichtung nach der Erfindung ein geschlossenes Schiebetor,
- Fig. 8: das Schiebetor nach Fig. 7 geöffnet,
- Fig. 9: ein weiteres Ausführungsbeispiel einer Übertragungsvorrichtung mit einer einsteckbar ausgebildeten Kopplungsvorrichtung,
- Fig. 10: eine Übertragungsvorrichtung mit einer Kopplungsvorrichtung mit buchsenartiger Aufnahme für die Übertragungsvorrichtung gem. Fig. 7,
- Fig. 11: die Kopplungsvorrichtungen der Übertragungsvorrichtungen gem. den Fig. 7 und 8 in einer Grundposition,
- Fig. 12: als Verwendungsbeispiel der Vorrichtungen nach den Fig. 9 bis 11 ein geöffnetes Schiebetor,
- Fig. 13: das Schiebetor nach Fig. 12 in einer Draufsicht,
- Fig. 14: einen Längsschnitt durch zwei weitere Übertragungsvorrichtung,
- Fig. 15: einen Schnitt durch zwei Übertragungsvorrichtungen, von denen eine L-förmig ausgebildet ist,
- Fig. 16: als Verwendungsbeispiel der Vorrichtung nach der Erfindung ein Tor in einem teilweise geöffneten Zustand,
- Fig. 17: eine Draufsicht auf das Tor nach Fig. 16,
- Fig. 18: ein weiteres Verwendungsbeispiel in Form eines Tores und
- Fig. 19: eine Draufsicht auf das Tor nach Fig. 18.

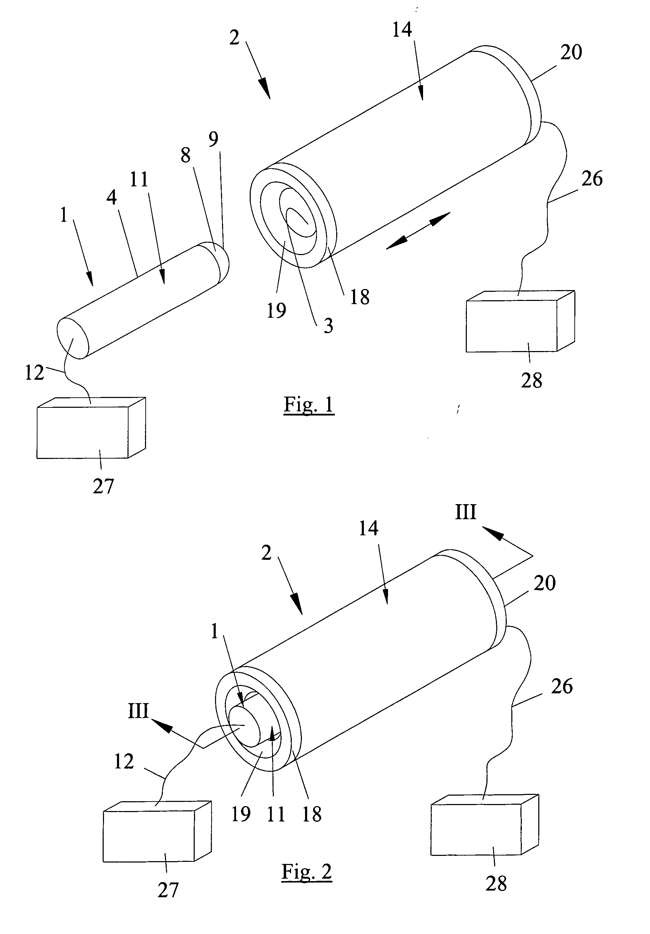

Die Fig. 1 bis 5 zeigen erste Ausführungsbeispiele von Kopplungsvorrichtungen 1,2 der erfindungsgemäßen mehrteiligen Schutz- und Überwachungsvorrichtung.

Die zweite Kopplungsvorrichtung 2 weist für eine koaxiale Aufnahme einer ersten Kopplungsvorrichtung 1 in einer Grundstellung gem. Fig. 2 eine entsprechende Aufnahme 3 auf. Beide Kopplungsvorrichtungen 1, 2 weisen bevorzugt eine längliche Zylinderform auf.

Die einsteckbare Kopplungsvorrichtung 1 besitzt eine rohrförmige Umhüllung 4, insbesondere aus einem rostfreien Stahl, in der eine primäre Wicklung 5 mit einer Vielzahl von Windungen um einen Kern 6 angeordnet ist. Der Kern 6 besteht aus Lamellen 7, die sich in der axialen Richtung der länglichen Zylinderform der Kopplungsvorrichtung 1 erstrecken.

Die Kopplungsvorrichtung 2 ist einerends durch einen Stopfen 8 mit abgerundetem Kopf 9 und andernends mit einer Abschlussplatte 10 verschlossen, so dass das Gehäuse 11 wasserdicht ist.

Die Primärwicklung 7 auf dem Kern 6 der Kopplungsvorrichtung 1 ist weiter an ein Stromkabel 12 angeschlossen, das durch ein Loch 13 in der Abschlussplatte 10 herausgeführt ist. Über das Stromkabel 12 und über ein Netzteil 27 ist die primäre Wicklung 7 weiter an ein Festnetz angeschlossen. Das Netzteil 27 liefert eine Wechselspannung, beispielsweise von 27 Volt. Infolge des Anschlusses an ein Wechselstrom-Netzteil 27 wird von der Kopplungsvorrichtung 1 ein Magnetfeld erzeugt, wenn die primäre Wicklung 5 unter Spannung steht.

Die zweite Kopplungsvorrichtung 2 weist ein Gehäuse 14 auf, das sich aus einem Außenrohr 15 und einem eine Innenwand 16 ausbildenden Innenrohr zusammensetzt, beide vorzugsweise aus einem rostfreien Stahl.

Radial außen liegend trägt die Innenwand 16 eine sekundäre Wicklung 17, deren axiale Länge im wesentlichen mit der Länge der primären Wicklung 5 übereinstimmt.

Das Außenrohr 15 und die rohrartige Innenwand 16 sind an einem Ende durch ein Wandelement 18, in dem eine konisch abgeschrägte Öffnung 19 für ein zentriertes Einführen der einsteckbaren Kopplungsvorrichtung 1 vorgesehen ist, miteinander verbunden. An ihren anderen Enden sind das Außenrohr 15 und die Innenwand 16 durch eine Platte 20 bzw. ein Wandelement 21 abgeschlossen, so dass auch dieses Gehäuse 14 dicht ist.

Die Abmessungen der Umhüllung 4 und der rohrartigen Innenwand 16 sind derart bemessen, dass die Kopplungsvorrichtung 1 mit lediglich geringem Spiel in die Aufnahme 3 der Kopplungsvorrichtung 2 eingeschoben werden kann.

Die primäre Wicklung 5 und die sekundäre Wicklung 17 weisen eine gemeinsame zentrale Symmetrieachse auf, die mit denen der Kopplungsvorrichtungen 1,2 zusammenfällt. In dem Gehäuse 14 der Kopplungsvorrichtung 2 ist weiter ein Netzteil 22 vorgesehen. Der Eingang dieses Netzteils 22 ist über ein Kabel 23 an die sekundäre Wicklung 17 angeschlossen. Aufgabe des Netzteils 22 ist eine Gleichrichtung und Stabilisierung der in der Grundstellung in der sekundären Wicklung 17 induzierten Wechselspannung.

Mit dieser stabilisierten Gleichspannung wird ein in dem Gehäuse 14 angeordneter Akkumulator 24 über eine elektrische Verbindung 25 geladen.

Der Akkumulator 24 speist über ein weiteres Kabel 26 einen elektrischen Verbraucher 28, welches Kabel 26 durch eine Durchbrechung in der Abschlussplatte 20 aus dem Gehäuse 14 herausgeführt wird.

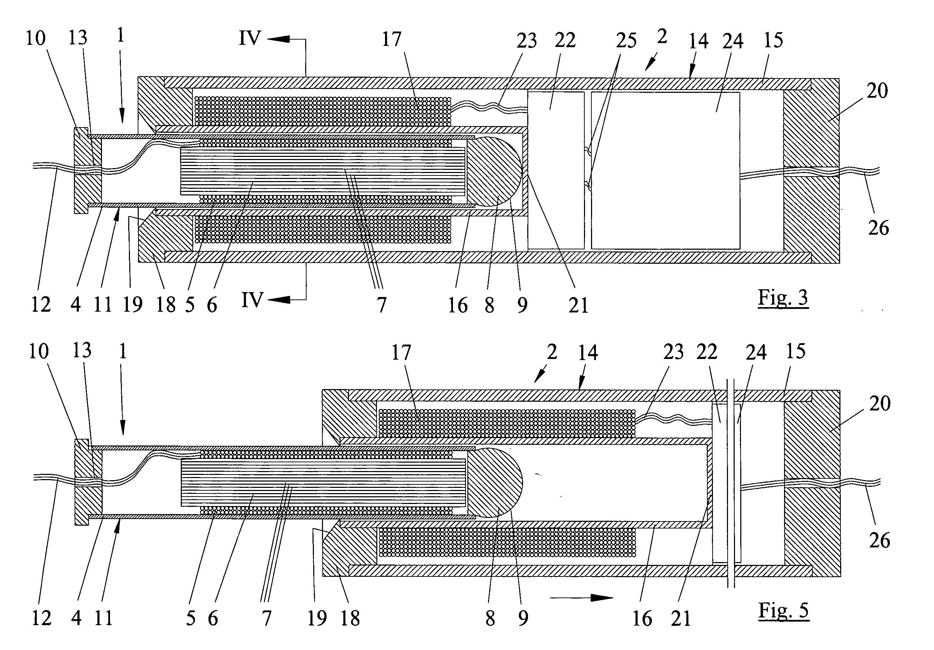

Die an das Wechselstrom-Netzteil 27 angeschlossene primäre Wicklung 5 erzeugt ein Magnetfeld um die Kopplungsvorrichtung 1. Ist die Kopplungsvorrichtung 1 in die Aufnahme 3 der Kopplungsvorrichtung 2, vorzugsweise umgekehrt, geschoben, vergleiche die in Fig. 3 wiedergegebene Grundstellung der Kopplungsvorrichtungen 1,2, befindet sich die sekundäre Wicklung 17 in diesem Magnetfeld und wird in dieser Sekundärwicklung 17 eine Spannung induziert. Diese Wechselspannung wiederum wird von dem der Kopplungsvorrichtung 2 eigenen Netzteil 22 gleichgerichtet und stabilisiert. Mit dieser Gleichspannung wird über den Akkumulator 24 gepuffert beispielsweise ein Verbraucher 28 mit elektrischer Energie versorgt.

Werden die Kopplungsvorrichtungen 1 und 2 getrennt, übernimmt der Akkumulator 24 die Energieversorgung allein.

Die kontaktfreie, induktive Energieübertragung wird durch ein minimales Spiel zwischen der einsteckbaren Kopplungsvorrichtung 1 und der Aufnahme 3 der Kopplungsvorrichtung 2 maximiert durch eine optimale axiale Positionierung und radiale Zentrierung der Wicklungen 5 und 17 gegeneinander. Aber auch wenn diese Positionierung und Zentrierung gem. Fig. 5 wenig optimal sind, die axiale Überdeckung beträgt dort lediglich etwa die Hälfte der axialen Erstreckung der Wicklungen 5, 17, ist weiterhin eine ausreichende Energieübertragung für eine Versorgung eines Verbrauchers bzw. für das Aufladen des Akkumulators 24 gewährleistet.

Die Gehäuse 11 und 14 sind wasserdicht ausgeführt und damit auch wetterfest. Eine Verwendung im Freien und auch der Kontakt mit aggressiven Mitteln, beispielsweise in der chemischen Industrie, ist problemlos möglich. Weitere Maßnahmen zum Schutz einzelner Komponenten, beispielsweise des Netzteils 22 oder des Akkumulators 24 können vorgesehen werden, beispielsweise ein Vergießen oder vollständiges Auffüllen mit einem Kunstharz oder dergleichen.

Durch die Verwendung von rostfreien Stahl oder vergleichbarer Metalle für die Gehäuse 11 und 14 werden elektronische Schaltkreise 41 in diesen Gehäuse 11 und 14 vor Radiowellen oder dergleichen geschützt, die von außen einwirken können.

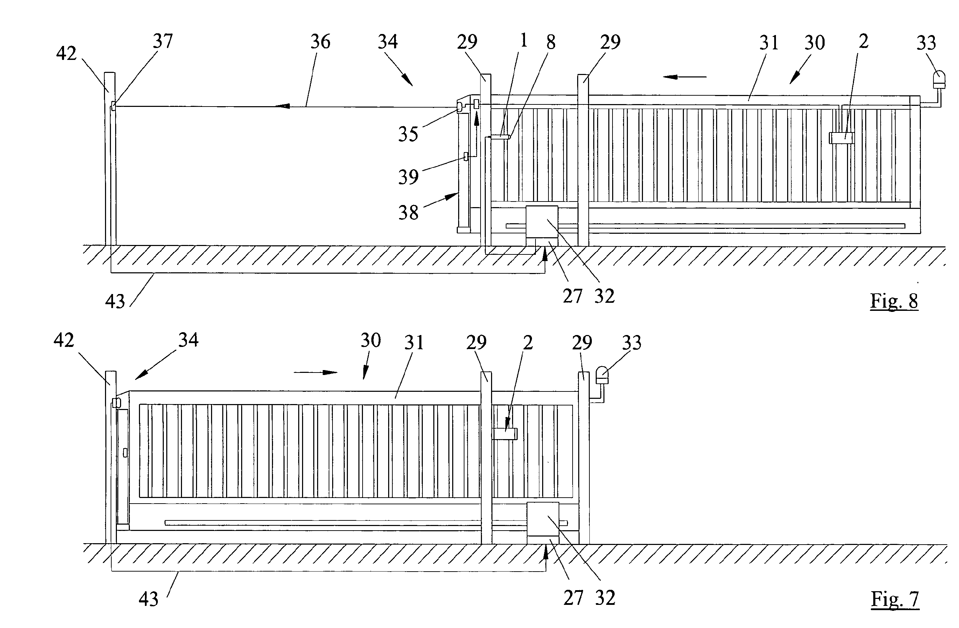

Anhand der Fig. 7 und 8 wird die Verwendung einer mehrteiligen Schutz- und Überwachungsvorrichtung nach der Erfindung weiter erläutert. Dort ist ein Schiebetor 30 dargestellt, dessen Torflügel 31 als Träger einer zweiten Kopplungsvorrichtung 2 relativ gegenüber einer Halterung 29 als feststehendem Träger einer ersten Kopplungsvorrichtung 1 geradlinig verschiebbar ist. Die Kopplungsvorrichtung 1 ist an ein festnetzfestes Wechselspannungsnetzteil 27 angeschlossen, das hier ebenfalls für die Stromversorgung eines elektromotorischen Antriebs 32 des Schiebetors 30 herangezogen wird.

Im geschlossenen Zustand gem. Fig. 7 über die induktive Kopplung oder im geöffneten Zustand gem. Fig. 8 durch den Akkumulator 24 in dem Gehäuse 14 der Kopplungsvorrichtung 2 werden weitere elektrische Energieverbraucher des Tores gespeist. Es kann dies in üblicher Weise beispielsweise ein Blicklicht 33 sein, das zu Beginn und während des Verfahrens des Torflügels 31 Gefahr signalisiert.

Für die Überwachung der freien Toreinfahrt zwischen einer Stirnseite des Torflügels 31 und einem Anschlagpfosten 42 sind nach Art einer Lichtschranke ausgebildet ein Sender 35 und ein Empfänger 37 der erfindungsgemäßen Übertragungsvorrichtungen weiter vorgesehen. Der Sender 35, lediglich angedeutet, der torflügelfesten Übertragungsvorrichtung erzeugt einen Lichtstrahl 36, der von einem Empfänger 37 einer unbeweglichen Übertragungsvorrichtung empfangen wird. Während die Stromversorgung der torflügelfesten Übertragungsvorrichtung über die induktive Kopplung der Kopplungsvorrichtungen 1, 2 im geschlossenen Grundzustand bzw. über den Akkumulator 24 bei geöffnetem Tor erfolgt, speist das Netzteil 27 über Kabel 43 auch den Empfänger 37 der unbeweglichen Übertragungsvorrichtung. Über die Kabel 43 wird auch der Empfang des Lichtstrahls 36 an eine Auswertevorrichtung der Übertragungsvorrichtung zurückgemeldet. Infolge dieser Maßnahmen kann bei einer Unterbrechung des Lichtstrahls 36 der elektromotorische Antrieb 32 in an sich üblicher Weise abgeschaltet werden.

An dem Torflügel 31 als Träger des Senders 35 ist als weitere Schutzvorrichtung 34 eine Sicherheitskontaktleiste 38 mit Messfühlern 39 vorgesehen. Läuft die Sicherheitskontaktleiste 38 auf ein Hindernis auf, wird zumeist ein Stromkreis geöffnet oder geschlossen, durch den der Sender 35 der Übertragungsvorrichtung aktiviert werden kann. Dieser Sender 35 überträgt an den Empfänger der unbeweglichen Übertragungsvorrichtung damit auch ein den Zustand der Sicherheitskontaktleiste 38 charakterisierendes Signal. Bei dem dargestellten Ausführungsbeispiel kann dies in einfacher Weise auch bedeuten, dass durch die Aktivierung der Sicherheitskontaktleiste 38 der Lichtstrahl 36 unterbrochen wird und damit ein Stillstand des Tores ausgelöst wird.

Bevorzugt erfolgt jedoch eine Übertragung des den Zustand der Sicherheitskontaktleiste 38 charakterisierenden Signals durch eine Modulation des Lichtstrahls 36 oder eine digitale Kodierung oder dergleichen, so dass die Sicherheitsfunktionen der durch die Übertragungsvorrichtungen geschaffenen Lichtschranke und die der Sicherheitskontaktleiste 38 getrennt voneinander, insbesondere auch über getrennte Lichtstrahlen, einer Auswertevorrichtung zugeführt werden können.

Ist das Tor 30 gem. Fig. 7 geschlossen, sind die Kopplungsvorrichtungen 1,2 ineinander gefahren und erfolgt ein Laden des Akkumulators 24.

Auch wenn das Schiebetor 30 in dem geschlossenen Zustand gem. Fig. 7 ein gewisses Spiel in der Bewegungsrichtung aufweist, also die Kopplungsvorrichtungen 1,2 nicht vollständig ineinander geschoben sind, ist eine den Akkumulator 24 aufladende Energieversorgung gesichert, um bei einem späteren Öffnen die Verbraucher 28 mit elektrischer Energie versorgen zu können.

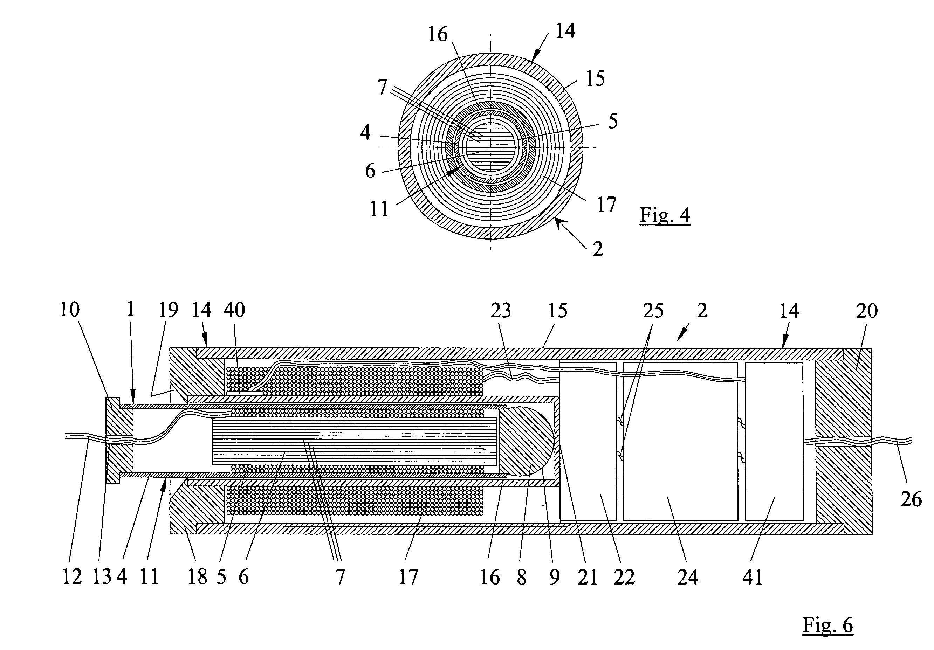

Fig. 6 zeigt eine weitere Ausführungsvariante von Kopplungsvorrichtungen 1,2, bei der die Kopplungsvorrichtung 2 einen drahtlos aktivierbaren Kontakt 40, beispielsweise ein Reed-Relais, aufweist, dessen Schaltposition davon abhängig ist, ob die Kopplungsvorrichtung 2 in der Aufnahme 3 eingebracht ist. Beispielhaft ist dieser Kontakt 40 mit einem Steuerkreis 41 verbunden, der durch das Einbringen bzw. Entfernen der Kopplungsvorrichtung 2 angesteuert wird. Je nach Stellung der Kopplungsvorrichtungen 1,2 zueinander können damit Verbraucher 28 geschaltet werden.

Das Netzteil 22 und der Steuerkreis 41 können selbstverständlich als gemeinsame elektronische Komponente ausgebildet werden.

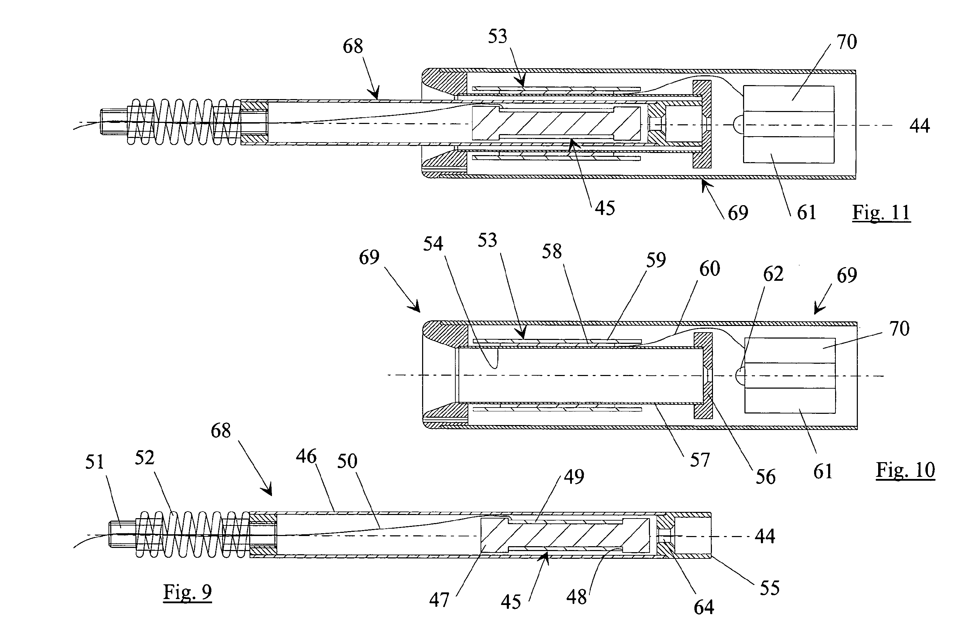

Anhand der Fig. 9 bis 11 wird eine mehrteilige Schutz- und Überwachungsvorrichtung nach der Erfindung weiter erläutert.

Fig. 9 zeigt eine erste Übertragungsvorrichtung 68 mit einer Kopplungsvorrichtung 45 in einem rohrartigen Gehäuse 46 mit einem länglich runden Kern 47, der in einer ringförmig umlaufenden Nut 48 eine primäre Wicklung 49 trägt. Über ein Kabel 50 ist die primäre Wicklung 49 an ein festnetzseitiges, nicht dargestelltes Netzteil weiter angeschlossen.

Die Übertragungsvorrichtung 68 wird über ein zapfenartiges Befestigungsstück 51 an einem Träger festgelegt, wobei zwischen der Übertragungsvorrichtung 68 und dem Befestigungsstück 51 eine Druckfeder 52 weiter angeordnet ist. Läuft nun eine zweite Übertragungsvorrichtung 69 mit einer Kopplungsvorrichtung 53 mit einer Aufnahme 54 für die Kopplungsvorrichtung 45 der Übertragungsvorrichtung 68 gem. Fig. 10 auf, wird ein mögliches Aufeinandertreffen der beiden Übertragungsvorrichtungen 68,69 durch die Druckfeder 52 gedämpft. Insbesondere wird hierdurch auch sicher eine exakte axiale Positionierung der Kopplungsvorrichtung 45 der Übertragungsvorrichtung 68 in der Aufnahme 54 der Kopplungsvorrichtung 53 gewährleistet, wenn eine Stirnseite 55 der Übertragungsvorrichtung 68 durch die Druckfeder 52 unter Spannung in Anlage an einem als Anschlag dienenden Wandelement 56 der Kopplungsvorrichtung 53 gehalten ist.

Die Aufnahme 54 der Kopplungsvorrichtung 53 wird durch eine rohrartige Innenwand 57 ausgebildet. Radial außen liegend ist eine sekundäre Wicklung 58 vorgesehen, die ihrerseits wieder radial innen liegend innerhalb eines ringförmig ausgebildeten Ringkerns 59 angeordnet ist.

Über ein Kabel 60 wird die in einer Grundstellung gem. Fig. 11 induzierte Spannung über ein Netzteil 70 einem Akkumulator 61 und gegebenenfalls weiteren Verbrauchern zugeführt.

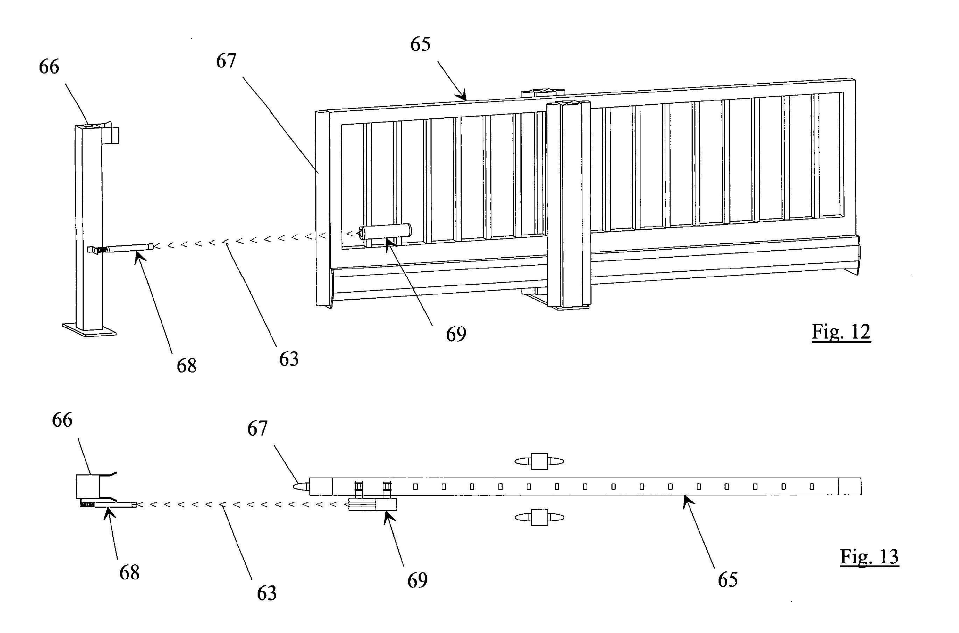

Teil der erfindungsgemäßen zweiten Übertragungsvorrichtung 69 ist ein einen Lichtstrahl 63, vgl. Fig. 12 und 13, aussendender Sender 62, hier lediglich durch die Darstellung einer Linse angedeutet, über die, im sichtbaren oder unsichtbaren Spektrum der Lichtstrahl 63 ausgesendet wird.

Dieser Lichtstrahl 63 wird von einem Empfänger 64 der Übertragungsvorrichtung 69 aufgefangen.

In an sich bekannter Weise kann durch das Unterbrechen des Lichtstrahls 63 bei einem Verfahren eines Torflügels 65 als Träger der zweiten Übertragungsvorrichtung 69 ein übliches Abschalten des Antriebes des Torflügels 65 ausgelöst werden.

Die den Lichtstrahl 63 empfangende erste Übertragungsvorrichtung 69 ist bei dem Ausführungsbeispiel gem. den Fig. 12 und 13 an einem Anschlagposten 67 als Träger weiter befestigt. Ist der Torflügel 65 in einer geschlossenen Stellung, so ergibt sich für die Kopplungsvorrichtungen 45,53 die Grundposition gem. Fig. 11, in der auf induktivem Übertragungsweg ein Akkumulator geladen werden kann, der in einer Offenstellung des Torflügels 65 elektrische Verbraucher wie den Sender 62 mit Energie versorgt.

Eine Stirnseite des Torflügels 65 trägt eine Sicherheitskontaktleiste 67. Der Sender 62 der Übertragungsvorrichtung 69 überträgt, mittels des Lichtstrahls 63, auch ein den Zustand der Sicherheitskontaktleiste 67 charakterisierendes Signal. Damit empfängt der Empfänger 64 der ersten Übertragungsvorrichtung 69 neben dem selbst eine Überwachungsfunktion ausübenden Lichtstrahl 63 auch Informationen hinsichtlich des Zustandes der Sicherheitskontaktleiste 67, die entsprechend einer Auswertung zugeführt werden können und durch deren Auftreten ein bestimmtes Ereignis ausgelöst werden kann, bspw. ein Not-Aus mit sofortiger Zwangsverriegelung des Torflügels 65.

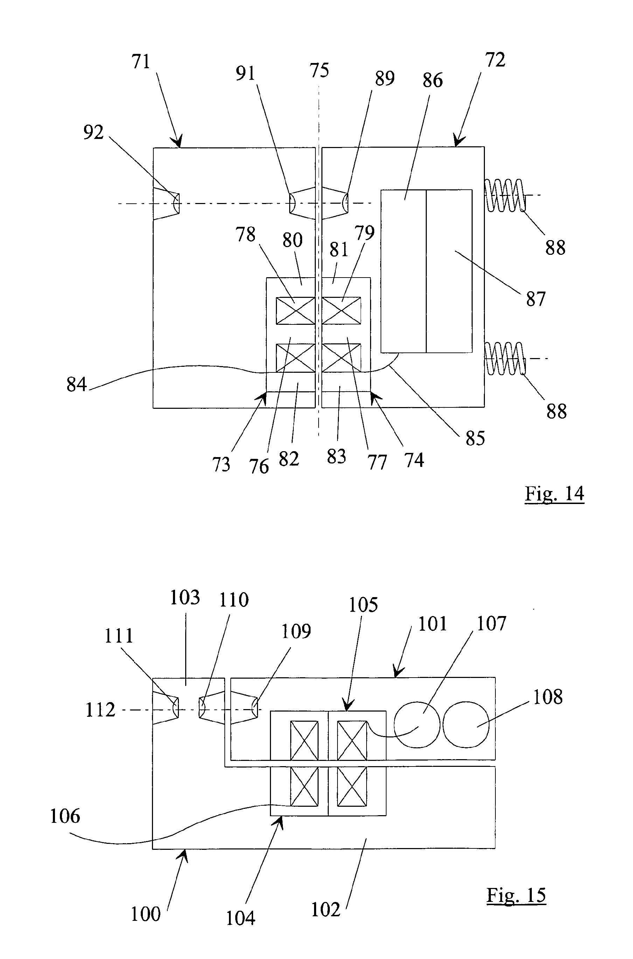

Fig. 14 zeigt schematisch ein Längsschnitt durch zwei weitere Ausführungsbeispiele von Übertragungsvorrichtungen 71,72. Die Übertragungsvorrichtungen 71, 72 weisen Kopplungsvorrichtungen 73,74 auf, die wieder der induktiven Energieübertragung in der dargestellten Grundstellung dienen.

In dem in Fig. 14 dargestellten Schnitt erscheinen die beiden Kopplungsvorrichtungen 73,74 entsprechend einem Schnitt durch einen Einphasen-Manteltransformator ausgebildet, der in einer Mittelebene 75 teilbar ist. Weiter sind hier Wicklungen 78,79 nicht auf einem Kern in einer radialen Anordnung ausgeführt, sondern trägt eine jede Kernhälfte 76,77 jeweils eine der Wicklungen 78,79. Wie der Kern durch die beiden Kernhälften 76,77 ausgebildet wird, werden auch die Außenjoche durch jeweils einer der Kopplungsvorrichtung 71,72 zugehörige Außenjochhälften 80 bis 83 ausgebildet.

Die primäre Wicklung 78 der Kopplungsvorrichtung 73 wird über ein Kabel 84 über ein nicht dargestelltes Netzteil aus einem Festnetz regelmäßig gespeist. Die in der sekundären Wicklung 79 der Kopplungsvorrichtung 74 induzierte Spannung wird über ein Kabel 85 in der erläuterten Weise über ein Netzteil 86 einem Akkumulator 87 zugeführt, aus dem elektrische Verbraucher gespeist werden, wenn die Übertragungsvorrichtungen 71,72 nicht in der dargestellten Grundstellung befindlich sind.

Die Übertragungsvorrichtungen 71,72 sind an relativ zueinander verfahrbaren Trägern angeordnet. Bei einem Aufeinanderfahren dieser Träger mit den Übertragungsvorrichtungen 71,72 in die in Fig. 14 gezeigte Grundstellung, erfolgt ein Aufeinandertreffen derselben durch die Kraft der der Übertragungsvorrichtungen 72 zugeordneten Druckfedern 88 stoßgedämpft.

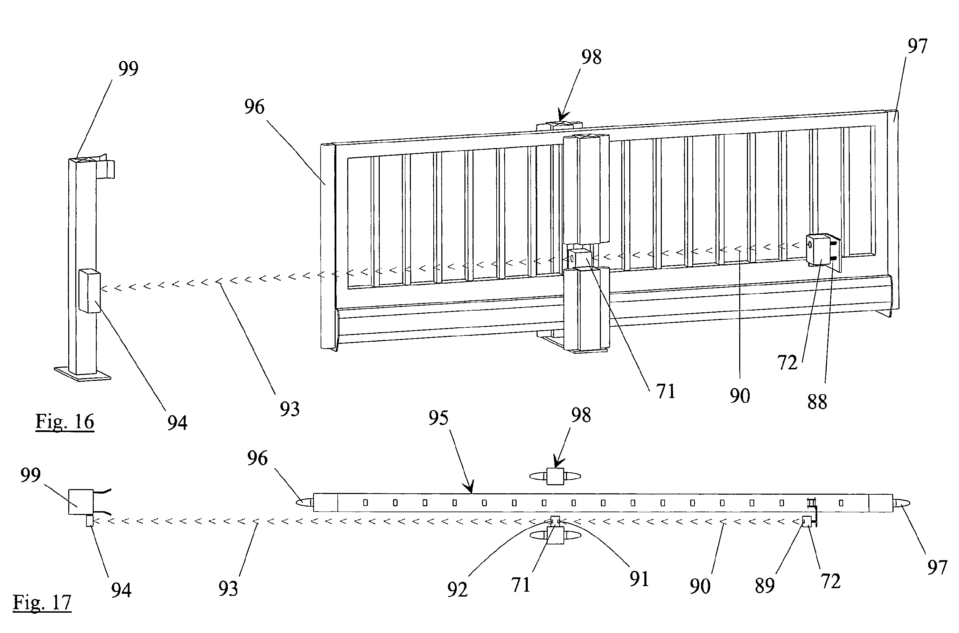

Ein elektrischer Verbraucher der Übertragungsvorrichtung 72 ist ein optischer Sender 89, hier lediglich durch eine Linse angedeutet. Dessen ausgesendeter Lichtstrahl 90, vergleiche Fig. 16, 17, wird von einem Empfänger 91, wiederum lediglich durch eine Linse dargestellt, der Übertragungsvorrichtung 71 empfangen. Die damit einen Empfänger aufweisende Übertragungsvorrichtung 71 ist mit einem weiteren optischen Sender 92 noch versehen, dessen Lichtstrahl 93 von einem gesondert ausgebildeten Empfänger 94 noch aufgefangen wird, vergleiche die Fig. 16 und 17. Bei einer derartigen konstruktiven Ausbildung der Übertragungsvorrichtungen 71, 72 wird durch den Lichtstrahl 93 nach Art einer Lichtschranke in an sich herkömmlicher Weise eine Tordurchfahrt oder dergleichen überwacht, während der von der Übertragungsvorrichtung 72 ausgestrahlte Lichtstrahl 90 den Zustand zweier an einem Torflügel 95 jeweils stirnseitig angebrachten Sicherheitskontaktleisten 96, 97 charakterisierende Signale dem Empfänger 91 der Übertragungsvorrichtung 71 übermittelt.

Die Übertragungsvorrichtung 71 ist hier ortsfest an einer Halterung 98 des Torflügels 95 und damit wie der gesondert ausgebildete Empfänger 94 an einem Anschlagpfosten 99 ortsfest. Damit sind die Empfänger 92,94 auch untereinander ortsfest und, verbunden über den Untergrund, an einem Träger im Sinne der Erfindung angeordnet.

Fig. 15 zeigt Varianten von Übertragungsvorrichtungen 100, 101. Die erste Übertragungsvorrichtung 100 ist in dem in Fig. 15 wiedergegebenen Längsschnitt im wesentlichen L-förmig ausgebildet. Zwischen den Schenkeln 102,103 ist in der wiedergegebenen Grundstellung die zweite, in dem Längsschnitt rechteckige Übertragungsvorrichtung 101 aufgenommen.

Eine in dem Schenkel 102 angeordnete Kopplungsvorrichtung 104 entsprechend dem Ausführungsbeispiel der Kopplungsvorrichtung 73 in Fig. 14 wird über ein Kabel 106 über ein Netzteil aus einem Festnetz gespeist. Die in einer Kopplungsvorrichtung 106 der zweiten Übertragungsvorrichtung 101 in der Grundstellung induzierte Spannung lädt über ein Netzteil 107 einen Akkumulator 108 und versorgt ggfls. weitere Verbraucher.

Die Übertragungsvorrichtung 101 ist wieder mit einem einen Lichtstrahl aussendenden Sender 109 versehen, der von einem Empfänger 110 in dem kürzeren Schenkel 103 der Übertragungsvorrichtung 100 empfangen wird. Ein weiterer optischer Sender 111, dessen Lichtstrahl von einem gesondert ausgebildeten Empfänger wiederum empfangen wird, ist letztlich auch hier noch vorgesehen.

Wie auch bei dem vorangehenden Ausführungsbeispiel erfolgt die optische Kommunikation zwischen den Sendern und Empfängern in einer Fluchtlinie 112.

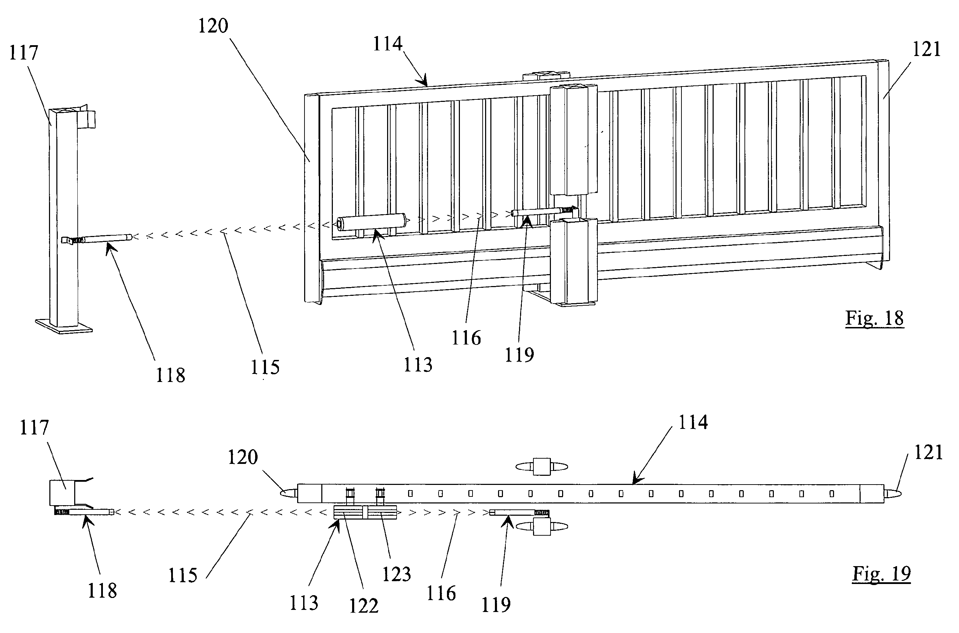

Die Fig. 18 und 19 zeigen ein weiteres Ausführungsbeispiel einer Übertragungsvorrichtung 113, die mitfahrend an einem Torflügel 114 angeordnet ist. Die Übertragungsvorrichtung 110 verfügt über zwei Lichtstrahlen 115,116 aussendende Sender. Durch den Lichtstrahl 112 wird in an sich üblicher Weise die Tordurchfahrt zwischen einer Stirnseite des Torflügels 114 und einem Anschlagpfosten 117 überwacht, der zu diesem Zweck eine Übertragungsvorrichtung 118 mit einem Empfänger aufweist. In der eingangs erläuterten Weise wird bei geschlossenem Torflügel 114 ein Akkumulator der Übertragungsvorrichtung 113 geladen, wozu die Übertragungsvorrichtung 118, beispielsweise in der in Fig. 9 dargestellten Form ausgebildet sein kann.

Der zweite Lichtstrahl 116 wird von einem Empfänger einer dritten Übertragungsvorrichtung 119 empfangen, mit welchem Lichtstrahl 113 den Zustand hier zweier stirnseitig des Torflügels 111 angebrachter Sicherheitskontaktleisten 117, 118 charakterisierende Signale übermittelt werden.

Hinsichtlich der induktiven Kopplung entspricht die Übertragungsvorrichtung 119 der Übertragungsvorrichtung 119. Unterschiede sind im wesentlichen lediglich hinsichtlich der Informationsauswertung gegeben. Ist ferner die Übertragungsvorrichtung 113 mit zwei entgegengesetzt endseitig geöffneten Aufnahmen für das Einbringen der Übertragungsvorrichtung 117,118 versehen, wird ein Akku sowohl in der geschlossenen wie auch in der offenen Position des Torflügels 114 geladen.

Eine derartige Anordnung ist auch bei entsprechender Ausbildung der Ausführungsbeispiele gem. den Fig. 14 und 15 problemlos möglich.

Die Verwendung der erfindungsgemäßen Vorrichtung, hier beispielhaft an Toren dargestellt, ist nicht auf solche beschränkt. Vielmehr kann eine derartige mehrteilige Schutz- und Überwachungsvorrichtung immer dort Verwendung finden, wo Träger relativ geradlinig zueinander bewegbar sind.

### Bezugszeichenliste:

- 1.: Kopplungsvorrichtung
- 2.: Kopplungsvorrichtung
- 3.: Aufnahme
- 4.: Umhüllung
- 5.: primäre Wicklung
- 6.: Kern
- 7.: Lamelle
- 8.: Stopfen
- 9.: Kopf
- 10.: Abschlussplatte
- 11.: Gehäuse von 1
- 12.: Stromkabel
- 13.: Loch
- 14.: Gehäuse von 2
- 15.: Außenrohr
- 16.: Innenwand
- 17.: sekundäre Wicklung
- 18.: Wandelement
- 19.: Öffnung
- 20.: Platte
- 21.: Wandelement
- 22.: Netzteil
- 23.: Kabel
- 24.: Akkumulator
- 25.: Verbindung
- 26.: Kabel
- 27.: Netzteil
- 28.: Verbraucher
- 29.: Halterung
- 30.: Schiebetor
- 31.: Torflügel
- 32.: Antrieb
- 33.: Blinklicht
- 34.: Schutzvorrichtung
- 35.: Sender
- 36.: Lichtstrahl
- 37.: Empfänger
- 38.: Sicherheitskontaktleiste
- 39.: Messfühler
- 40.: Kontakt
- 41.: Steuerkreis
- 42.: Anschlagpfosten
- 43.: Kabel
- 44.: Symmetrieachse
- 45.: Kopplungsvorrichtung
- 46.: Gehäuse
- 47.: Kern
- 48.: Nut
- 49.: primäre Wicklung
- 50.: Kabel
- 51.: Befestigungsstück
- 52.: Druckfeder
- 53.: Kopplungsvorrichtung
- 54.: Aufnahme
- 55.: Stirnseite
- 56.: Wandelement
- 57.: Innenwand
- 58.: sekundäre Wicklung
- 59.: Ringkern
- 60.: Kabel
- 61.: Akkumulator
- 62.: Sender
- 63.: Lichtstrahl
- 64.: Empfänger
- 65.: Torflügel
- 66.: Anschlagpfosten
- 67.: Sicherheitskontaktleiste
- 68.: Übertragungsvorrichtung
- 69.: Übertragungsvorrichtung
- 70.: Netzteil
- 71.: Übertragungsvorrichtung
- 72.: Übertragungsvorrichtung65
- 73.: Kopplungsvorrichtung
- 74.: Kopplungsvorrichtung
- 75.: Mittelebene
- 76.: Kernhälfte
- 77.: Kernhälfte
- 78.: Wicklung
- 79.: Wicklung
- 80.: Außenjochhälfte
- 81.: Außenjochhälfte
- 82.: Außenjochhälfte
- 83.: Außenjochhälfte
- 84.: Kabel
- 85.: Kabel
- 86.: Netzteil
- 87.: Akkumulator
- 88.: Druckfeder
- 89.: Sender
- 90.: Lichtstrahl
- 91.: Empfänger
- 92.: Sender
- 93.: Lichtstrahl
- 94.: Empfänger
- 95.: Torflügel
- 96.: Sicherheitskontaktleiste
- 97.: Sicherheitskontaktleiste
- 98.: Halterung
- 99.: Anschlagpfosten
- 100.: Übertragungsvorrichtung
- 101.: Übertragungsvorrichtung
- 102.: Schenkel
- 103.: Schenkel
- 104.: Kopplungsvorrichtung
- 105.: Kopplungsvorrichtung
- 106.: Kabel
- 107.: Netzteil
- 108.: Akkumulator
- 109.: Sender
- 110.: Empfänger
- 111.: Sender
- 112.: Fluchtlinie
- 113.: Übertragungsvorrichtung
- 114.: Torflügel
- 115.: Lichtstrahl
- 116.: Lichtstrahl
- 117.: Anschlagpfosten
- 118.: Übertragungsvorrichtung
- 119.: Übertragungsvorrichtung
- 120.: Sicherheitskontaktleiste
- 121.: Sicherheitskontaktleiste
- 122.: Kopplungsvorrichtung
- 123.: Kopplungsvorrichtung

## Patentansprüche

1. Mehrteilige Schutz- und Überwachungsvorrichtung, aufweisend wenigstens zwei miteinander optisch nach Art einer Lichtschranke in Verbindung stehende Übertragungsvorrichtungen, jeweils angebracht an relativ zueinander geradlinig bewegbaren Trägern, **dadurch gekennzeichnet, dass** die Energieversorgung einer ersten Übertragungsvorrichtung (68) aus einem Festnetz erfolgt, dass die Energieversorgung einer zweiten Übertragungsvorrichtung (69) aus einem Akkumulator (61) erfolgt und dass die erste und die zweite Übertragungsvorrichtung (68,69) Kopplungsvorrichtungen (45,53) für eine kontaktlose, induktive Energieübertragung in einer Grundstellung aufweisen für eine Energieversorgung der zweiten Übertragungsvorrichtung (69).

2. Vorrichtung nach einem oder mehreren der vorangehenden Ansprüche, **dadurch gekennzeichnet, dass** an einem Träger (65) wenigstens eine Sicherheitskontaktleiste (67) angeordnet ist, dass die an diesem Träger (65) angebrachte Übertragungsvorrichtung (69) mit einem Sender (62) und die an dem anderen Träger (66) angebrachte Übertragungsvorrichtung (68) mit einem Empfänger (64) versehen sind und dass der Sender (62) ein den Zustand der Sicherheitskontaktleiste (67) charakterisierendes Signal ausstrahlt.

3. Vorrichtung nach Anspruch 3, **dadurch gekennzeichnet, dass** das Signal mittels eines Lichtstrahls (63) einer Lichtschranke übertragen wird.

4. Vorrichtung nach einem oder mehreren der vorangehenden Ansprüche, **dadurch gekennzeichnet, dass** eine mit einem Empfänger (91) versehene Übertragungsvorrichtung (71) mit einem zweiten Sender (92) versehen ist.

5. Vorrichtung nach einem oder mehreren der vorangehenden Ansprüche, **dadurch gekennzeichnet, dass** die mit einem Sender versehene Übertragungsvorrichtung (113) mit einem weiteren Sender versehen ist und dass die ausgesendeten Signale von Empfängern zweier anderer Übertragungsvorrichtungen (118,119) empfangen werden.

6. Vorrichtung nach einem oder mehreren der vorangehenden Ansprüche, **dadurch gekennzeichnet, dass** die beiden mit Empfängern versehene Übertragungsvorrichtungen (118,119) zueinander ortsfest an einem Träger angeordnet sind.

7. Vorrichtung nach einem oder mehreren der vorangehenden Ansprüche, **dadurch gekennzeichnet, dass** die optische Kommunikation zwischen den Sendern und den Empfängern in einer Fluchtlinie (112) erfolgt.

8. Vorrichtung nach einem oder mehreren der vorangehenden Ansprüche, **dadurch gekennzeichnet, dass** wenigstens eine Übertragungsvorrichtung (68) in der Richtung der Bewegung der Übertragungsvorrichtungen (68,69) zueinander gegen die Kraft einer Feder (52) verschiebbar angeordnet ist.

9. Vorrichtung nach einem oder mehreren der vorangehenden Ansprüche, **dadurch gekennzeichnet, dass** eine einsteckbare Kopplungsvorrichtung (2) einen Kern (6) mit einer primären Wicklung (5) und die andere Kopplungsvorrichtung (1) eine buchsenartige Aufnahme (3) mit einer sekundären Wicklung (17) für die eine Aufnahme der anderen Kopplungsvorrichtung (2) aufweist und dass in der Grundstellung die sekundäre Wicklung (17) und die primäre Wicklung (5) koaxial und zumindest teilweise axial überlappend positioniert sind.

10. Vorrichtung nach einem oder mehreren der vorangehenden Ansprüche, **dadurch gekennzeichnet, dass** die primäre Wicklung (5) an das Festnetz und die sekundäre Wicklung (17) über ein Netzteil (22) an den Akkumulator (24) angeschlossen ist.

11. Vorrichtung nach einem oder mehreren der vorangehenden Ansprüche, **dadurch gekennzeichnet, dass** der Kern (6) Lamellen (7) aufweist, die sich axial erstrecken.

12. Vorrichtung nach einem oder mehreren der vorangehenden Ansprüche, **dadurch gekennzeichnet, dass** die Wickelachsen der Wicklungen (49,58) auf einer gemeinsamen zentralen Symmetrieachse (44) liegen.

13. Vorrichtung nach einem oder mehreren der vorangehenden Ansprüche, **dadurch gekennzeichnet, dass** der Kern (6) mit der primären Wicklung (5) innerhalb eines Gehäuses (11) angeordnet ist und dass die Aufnahme (3) eine rohrartige Innenwand (16) aufweist, um die radial außenliegend die sekundäre Wicklung (17) angeordnet ist.

14. Vorrichtung nach einem oder mehreren der vorangehenden Ansprüche, **dadurch gekennzeichnet, dass** die sekundäre Wicklung (58) innerhalb eines Ringkerns (59) angeordnet ist.

15. Vorrichtung nach einem oder mehreren der Ansprüche 1 bis 8, **dadurch gekennzeichnet, dass** in der Grundstellung in einem Längsschnitt die Kopplungsvorrichtungen (73,74) wie ein Einphasen-Manteltransformator ausgebildet sind, der in einer Mittelebene (75) quer zu der des Längsschnitts teilbar ist und dass jeweils eine Kernhälfte (76,77) eine Wicklung trägt.

16. Vorrichtung nach einem oder mehreren der vorangehenden Ansprüche, **dadurch gekennzeichnet, dass** eine Übertragungsvorrichtung (100) in einem Längsschnitt L-förmig ausgebildet ist und dass in den Raum zwischen den Schenkeln (102,103) in der Grundstellung die zweite, in diesem Längsschnitt rechteckige Übertragungsvorrichtung (101) aufgenommen ist.
